# EUROPEAN PATENT APPLICATION

(11) **EP 4 736 988 A1**
(43) Date of publication of application: **06.05.2026**
(21) Application number: 24831665.5
(22) Date of filing: 12.06.2024
(51) Int. Cl.: B01D 53/14, B01D 53/62, B01D 53/78, C08K 5/17, C08L 67/00, C08L 69/00, C08L 71/02

(54) **ACIDIC GAS-ABSORBING LIQUID AND ACIDIC GAS REDUCTION METHOD**

(30) Priority: 29.06.2023 JP 2023106990
(71) Applicant: AGC INC., Chiyoda-ku, Tokyo 1008405 (JP); NATIONAL UNIVERSITY CORPORATION TOKAI NATIONAL HIGHER EDUCATION AND RESEARCH SYSTEM, Nagoya-shi, Aichi 464-8601 (JP)
(72) Inventor: IKAWA, Seiya, Tokyo 100-8405 (JP); SUZUKI, Toyokazu, Tokyo 100-8405 (JP); KOGUCHI, Ryohei, Tokyo 100-8405 (JP); MACHIDA, Hiroshi, Nagoya-shi, Aichi 464-8601 (JP); NORINAGA, Koyo, Nagoya-shi, Aichi 464-8601 (JP)
(74) Representative: Müller-Boré & Partner Patentanwälte PartG mbB
(86) International application number: PCT/JP2024/021260
(87) International publication number: WO 2025/004799

(57) **Abstract**

Provided are an acidic gas absorbing solution and acidic gas reducing method that enable reduction in energy required for recovering an acidic gas from a gas with less impact on solvent loss, even if the gas contains moisture. The acidic gas absorbing solution of the present invention is an acidic gas absorbing solution that reversibly absorbs and desorbs carbon dioxide, the acidic gas absorbing solution containing: an oxygen-containing polymer and an amine compound, wherein the oxygen-containing polymer has at least one group selected from the group consisting of an oxyalkylene group, a carbonate group, and an ester group, has a number-average molecular weight of 250 to 20000, has a boiling point of 200°C or more, and has a solubility parameter of 15.0 (MPa)^{1/2} or more and less than 19.5 (MPa)^{1/2}, and the amine compound has a solubility parameter of 13.0 to 25.5 (MPa)^{1/2}.

## Description

### Technical Field

The present invention relates to an acidic gas absorbing solution and acidic gas reducing method that are useful for reducing an acidic gas in a gas.

### Background Art

Known as a method for recovering an acidic gas, which is typified by carbon dioxide, from a gas is a method of absorbing and separating an acidic gas by using an acidic gas absorbing solution (hereinafter, also referred to as an absorbing solution, simply) containing an amine compound and an organic solvent, and desorbing the acidic gas absorbed in the absorbing solution from the absorbing solution by heating and recovering the acidic gas. Such an absorbing solution, which is also called a chemical absorbing solution, utilizes reversible reaction of formation and regeneration of an amine salt by an amine compound.

From the viewpoint of energy saving for such acidic gas recovering methods, various methods have been proposed for reducing energy required for heating in desorbing an acidic gas from an absorbing solution. For example, PTL1 proposes a method of using an absorbing solution containing an amine compound and an organic solvent having a difference in solubility parameter from the amine compound within a specific range. In this method, a combination of an amine compound and an alcohol such as 1-butanol and 1-pentanol or an ether such as diethylene glycol diethyl ether is selected, thereby allowing a phenomenon in which an acidic gas-absorbed solution undergoes phase separation into a high-acidic-gas-content phase and a low-acidic-gas-content phase to be utilized. According to PTL1, heating the high-acidic-gas-content phase selectively for acidic gas desorption treatment reduces energy required for recovering the acidic gas compared to the case in which acidic gas desorption treatment is performed on the entire absorbing solution.

### Citation List

### Patent Literature

PTL1: JP 6460974 B

### Summary of Invention

### Technical Problem

Exhaust gases from thermal power plants and various industrial processes contain water vapor (moisture) in most cases. Accordingly, recovery of an acidic gas from such an exhaust gas requires a step of removing moisture in advance by heating treatment or the like. When reusing an absorbing solution, the absorbing solution is regenerated by allowing the absorbing solution to absorb an acidic gas from an exhaust gas containing moisture, and then subjecting the absorbing solution to acidic gas desorption treatment and separation and removal of moisture.

In evaporating moisture by heating an exhaust gas or an absorbing solution to remove moisture, huge energy is required for heating in any cases.

Even if a high-acidic-gas-content phase is heated solely for performing acidic gas desorption treatment using the absorbing solution described in PTL1, energy required for heating could not be sufficiently reduced due to the latent heat of water.

In addition, in the absorbing solution described in PTL1, when an organic solvent as a component contained therein volatilizes, heating for absorbing solution regeneration through acidic gas desorption increases cost for a process to recover the solvent that has volatilized or for replenishing the organic solvent. Moreover, the absorbing solution has poor regeneration efficiency for reuse.

The present invention has been made to solve such a problem, and an object of the present invention is to provide an acidic gas absorbing solution and acidic gas reducing method that enable reduction in energy required for recovering an acidic gas from a gas with less negative influence on solvent loss, even if the gas contains moisture.

### Solution to Problem

The present invention is based on a finding that when an acidic gas absorbing solution containing a combination of a specific hydrophobic oxygen-containing polymer and an aqueous amine compound having a specific solubility parameter is allowed to absorb carbon dioxide, the acidic gas absorbing solution undergoes phase separation into an aqueous phase and an organic phase having carbon dioxide absorbed therein.

The present invention provides the following means.
[1] An acidic gas absorbing solution that reversibly absorbs and desorbs carbon dioxide, the acidic gas absorbing solution comprising: an oxygen-containing polymer; and an amine compound, wherein the oxygen-containing polymer has at least one group selected from the group consisting of an oxyalkylene group, a carbonate group, and an ester group, has a number-average molecular weight of 250 to 20000, has a boiling point of 200°C or more, and has a solubility parameter of 15.0 (MPa)^{1/2} or more and less than 19.5 (MPa)^{1/2}, and the amine compound has a solubility parameter of 13.0 (MPa)^{1/2} to 25.5 (MPa)^{1/2}.
[2] The acidic gas absorbing solution according to [1], wherein the oxygen-containing polymer has a group represented as -OR at a terminus, the R is a hydrogen atom or a bonding group having 1 to 8 carbon atoms, and the bonding group is optionally linear or branched, optionally has an unsaturated bond, and optionally contains at least either one of a nitrogen atom and an oxygen atom.
[3] The acidic gas absorbing solution according to [1] or [2], wherein the oxygen-containing polymer is at least one selected from the group consisting of polyether monool, polyether polyol, polyester polyol, polycarbonate polyol, and polyether polycarbonate polyol.
[4] The acidic gas absorbing solution according to any one of [1] to [3], wherein a difference between the solubility parameter of the oxygen-containing polymer and the solubility parameter of the amine compound is 7.0 (MPa)^{1/2} or less.
[5] The acidic gas absorbing solution according to any one of [1] to [4], comprising the oxygen-containing polymer in an amount of 5 to 90% by mass and the amine compound in an amount of 5 to 90% by mass.
[6] The acidic gas absorbing solution according to any one of [1] to [5], for a recovery and/or separation process for an acidic gas.
[7] An acidic gas reducing method, wherein the acidic gas absorbing solution according to any one of [1] to [6] and a gas comprising carbon dioxide and moisture are brought into contact to reduce carbon dioxide in the gas.
[8] The acidic gas reducing method according to [7], wherein an organic phase comprising the oxygen-containing polymer and the amine compound is recovered from the acidic gas absorbing solution that has undergone phase separation through contact with the gas comprising carbon dioxide and moisture, and the organic phase is reused as an acidic gas absorbing solution for bringing into contact with a gas comprising carbon dioxide and water.

### Advantageous Effects of Invention

The present invention provides an acidic gas absorbing solution and acidic gas reducing method that enable reduction in energy required for recovering an acidic gas from a gas with less impact on solvent loss, even if the gas contains moisture.

### Description of Embodiments

The following shows the definitions and meanings of terms in the present specification.

Each numerical range expressed with "to" means that the numerical values before and after "to" are the lower limit value and the upper limit value, respectively.

The number-average molecular weight (Mn) of an oxygen-containing polymer is defined as a molecular weight determined through gel permeation chromatography (GPC) using polystyrene as standards.

The molecular weight of each oxygen-containing polymer (hydroxy group terminus) in terms of hydroxyl value was calculated from the expression 56100 / (hydroxyl value) × (number of terminal hydroxy groups in one molecule), wherein the hydroxyl value was determined in accordance with JIS K 1557-1: 2007.

The boiling point of an oxygen-containing polymer is a value calculated with the chemical structural formula drawing software "ChemDraw v17.1" (CambridgeSoft).

A solubility parameter is a value calculated by the Fedors method at 25°C. For the chemical formulas of chemicals in calculation by the Fedors method, known structural formulas were applied to amine compounds, and the number of repeating units in each oxygen-containing polymer was defined as an integer value (rounded off) given by subtracting the formula masses of the terminal structures specified through ¹H-NMR and ¹³C-NMR analyses from the number-average molecular weight and then dividing the resultant by the formula mass of the constituent unit of the oxygen-containing polymer.

### [Acidic gas absorbing solution]

The acidic gas absorbing solution of the present invention is an acidic gas absorbing solution that reversibly absorbs and desorbs carbon dioxide, and contains an oxygen-containing polymer and an amine compound. The oxygen-containing polymer has at least one group selected from the group consisting of an oxyalkylene group, a carbonate group, and an ester group, has a number-average molecular weight of 250 to 20000, has a boiling point of 200°C or more, and has a solubility parameter of 15.0 (MPa)^{1/2} or more and less than 19.5 (MPa)^{1/2}. The amine compound has a solubility parameter of 13.0 to 25.5 (MPa)^{1/2}.

The acidic gas is a gas containing carbon dioxide, and may contain an additional acidic gas such as hydrogen sulfide and sulfurous acid gas. The acidic gas absorbing solution of an embodiment of the present invention (hereinafter, referred to as the present embodiment) is capable of reversibly absorbing and desorbing carbon dioxide in particular among acidic gases, and reusable through regeneration.

The following describes the case that the acidic gas to be absorbed by the acidic gas absorbing solution is carbon dioxide as an example.

The acidic gas absorbing solution of the present embodiment contains a hydrophobic oxygen-containing polymer having a specific solubility parameter and an amine compound having a specific solubility parameter.

The acidic gas absorbing solution having the configuration absorbs less moisture, and undergoes phase separation when having absorbed carbon dioxide to separate into an aqueous phase and an organic phase having carbon dioxide absorbed therein, and hence there is no need for evaporation by heating in order to separate and remove moisture from the acidic gas absorbing solution. Accordingly, reduction in energy required for recovering carbon dioxide from a gas is successfully achieved, even if the gas contains moisture.

The oxygen-containing polymer has higher boiling points and less volatility than conventional organic solvents to be used in combination with an amine compound, thus causing less impact on solvent loss.

### (Oxygen-containing polymer)

The oxygen-containing polymer contained in the acidic gas absorbing solution is a polymer having at least one group selected from the group consisting of an oxyalkylene group, a carbonate group, and an ester group and having a number-average molecular weight (Mn) of 250 to 20000.

The oxygen-containing polymer having the configuration allows an amine salt that has formed through the absorption of carbon dioxide by the acidic gas absorbing solution to readily dissolve in the acidic gas absorbing solution, facilitating phase separation into an aqueous phase and an organic phase containing the oxygen-containing polymer and having carbon dioxide absorbed therein.

Preferably, the oxygen-containing polymer has a group represented as -OR at a terminus. R in -OR is preferably a hydrogen atom or a bonding group having 1 to 8 carbon atoms, and more preferably a hydrogen atom or a bonding group having 1 to 4 carbon atoms. The bonding group is optionally linear or branched, optionally has an unsaturated bond, optionally contains at least either one of a nitrogen atom and an oxygen atom, and is preferably a hydrogen atom or an alkyl group. Examples of the alkyl group as the bonding group include a methyl group, an ethyl group, a propyl group, a butyl group, a pentyl group, a hexyl group, an octyl group, and a 2-ethylhexyl group.

Having a terminal group containing an oxygen atom, the oxygen-containing polymer allows carbon dioxide to be more readily absorbed by the acidic gas absorbing solution.

Examples of the oxygen-containing polymer include polyethers, polycarbonates, and polyesters; among them, polyether monool, polyether polyol, polyester polyol, polycarbonate polyol, and polyether polycarbonate polyol are preferable. For the oxygen-containing polymer, one of those may be used singly; otherwise, two or more thereof may be used in combination.

### <Polyether monool>

The polyether monool is preferably a product obtained by subjecting an alkylene oxide to addition polymerization with an initiator having one active hydrogen atom in one molecule. The addition polymerization can be performed by a known method in the presence of a catalyst.

Preferable as the initiator is a compound having one hydroxy group in one molecule, and examples thereof include monohydric alcohols such as methanol, ethanol, 2-propanol, n-butanol, tert-butanol, allyl alcohol, isobutanol, 2-ethylhexanol, decyl alcohol, lauryl alcohol, tridecanol, cetyl alcohol, stearyl alcohol, oleyl alcohol, ethylene glycol monomethyl ether, ethylene glycol monoethyl ether, ethylene glycol monopropyl ether, ethylene glycol monoisopropyl ether, ethylene glycol monobutyl ether, ethylene glycol monoisobutyl ether, ethylene glycol mono-tert-butyl ether, ethylene glycol monohexyl ether, ethylene glycol monophenyl ether, diethylene glycol monomethyl ether, diethylene glycol monoethyl ether, diethylene glycol monopropyl ether, diethylene glycol monobutyl ether, diethylene glycol monobenzyl ether, triethylene glycol monomethyl ether, triethylene glycol monoethyl ether, triethylene glycol monobutyl ether, tetraethylene glycol monomethyl ether, and tetraethylene glycol monobutyl ether. For the initiator, one of those may be used singly; otherwise, two or more thereof may be used in combination.

The alkylene oxide preferably has 2 to 20 carbon atoms, more preferably has 2 to 10 carbon atoms, and even more preferably has 3 to 8 carbon atoms. Examples of the alkylene oxide include propylene oxide, 1,2-butylene oxide, 2,3-butylene oxide, tetramethylene oxide (tetrahydrofuran), and α-olefin oxides having 5 to 20 carbon atoms. Preferable among them is propylene oxide. For the alkylene oxide, one of those may be used singly; otherwise, two or more thereof may be used in combination.

Known catalysts are applicable as the catalyst, and examples thereof include alkali catalysts such as potassium hydroxide, transition metal compound- porphyrin complex catalysts such as a complex obtained by reacting an organoaluminum compound and porphyrin, composite metal cyanide complex catalysts such as a zinc hexacyanocobaltate complex having tert-butanol as ligands, and catalysts consisting of a phosphazene compound. For the catalyst, one of those may be used singly; otherwise, two or more thereof may be used in combination.

### <Polyether polyol>

Preferable as the polyether polyol is a product obtained by subjecting an alkylene oxide to addition polymerization with an initiator having two or more active hydrogen atoms in one molecule.

The initiator is preferably a compound having two or more hydroxy groups in one molecule, and examples thereof include dihydric alcohols such as ethylene glycol, diethylene glycol, propylene glycol, dipropylene glycol, tripropylene glycol, 1,3-propanediol, 1,3-butanediol, 1,4-butanediol, 1,6-hexanediol, 1,4-cyclohexanediol, bisphenol A, bisphenol F, bisphenol S, and resorcin; and trihydric or higher alcohols such as glycerin, diglycerin, trimethylolpropane, pentaerythritol, dipentaerythritol, tripentaerythritol, glucose, sorbitol, dextrose, fructose, sucrose, methyl glucoside, trehalose, novolac, resol, and castor oil. Water is also applicable as the initiator. Preferable among those are ethylene glycol, diethylene glycol, propylene glycol, dipropylene glycol, tripropylene glycol, glycerin, trimethylolpropane, pentaerythritol, and sorbitol. For the initiator, one of those may be used singly; otherwise, two or more thereof may be used in combination.

Specific examples of the alkylene oxide are the same as those of the alkylene oxide as a raw material for synthesis of the polyether monool.

Likewise, the addition polymerization can be performed by the same method as for synthesis of the polyether monool.

Specific examples of the polyether polyol include polyethylene glycol, polypropylene glycol, polyoxyethylene polyoxypropylene glycol, polyoxytetramethylene glycol, and addition polymer of polyoxytetramethylene glycol and alkylene oxide.

### <Polyester polyol>

Preferable as the polyester polyol is a reaction product obtained by subjecting a dibasic acid and a polyhydric alcohol to esterification reaction or subjecting a dibasic acid dialkyl ester and a polyhydric alcohol to transesterification reaction. The esterification reaction or transesterification reaction can be performed by a known method in the presence of a catalyst.

Examples of the dibasic acid include aliphatic dibasic acids such as succinic acid, glutaric acid, adipic acid, pimelic acid, suberic acid, azelaic acid, sebacic acid, dodecanedioic acid, brassylic acid, and dimer acid; alicyclic dicarboxylic acids such as 1,4-cyclohexanedicarboxylic acid; and aromatic dibasic acids such as phthalic acid, isophthalic acid, terephthalic acid, and naphthalenedicarboxylic acid.

Examples of the dibasic acid dialkyl ester include dimethyl esters, diethyl esters, dipropyl esters, and dibutyl esters of those dibasic acids shown as examples. For the dibasic acid, one of those may be used singly; otherwise, two or more thereof may be used in combination.

Examples of the polyhydric alcohol include diols such as ethylene glycol, diethylene glycol, propylene glycol, dipropylene glycol, triethylene glycol, tripropylene glycol, neopentyl glycol, 1,4-butanediol, and 1,6-hexanediol; and trihydric or higher alcohols such as glycerin, trimethylolpropane, trimethylolethane, pentaerythritol, sorbitol, and sucrose. For the polyhydric alcohol, one of those may be used singly; otherwise, two or more thereof may be used in combination.

Examples of the catalyst include titanium compounds such as tetrabutyl titanate, tetraisopropyl titanate, tetra-2-ethylhexyl titanate, and titanium acetylacetonate; tin compounds such as dibutyltin oxide, methylphenyltin oxide, and hexaethyltin oxide; and magnesium compounds such as magnesium carbonate, magnesium oxide, and magnesium alkoxide. For the catalyst, one of those may be used singly; otherwise, two or more thereof may be used in combination.

### <Polycarbonate polyol>

Examples of the polycarbonate polyol include polycondensates of a polyhydric alcohol and a carbonate compound and polycondensates of a polyhydric alcohol, together with a cyclic ester, and a carbonate compound. Synthesis of the polycarbonate polyol can be performed by a known method.

Examples of the polyhydric alcohol include aliphatic diols such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,16-hexadecanediol, 1,18-octadecanediol, 1,20-eicosanediol, 2-methyl-1,8-octanediol, 2,2-dimethyl-1,3-propanediol, 2-ethyl-1,3-hexanediol, 2-ethyl-1,6-hexanediol, 2-methyl-1,4-butanediol, 2-methyl-1,3-propanediol, 3-methyl-1,5-pentanediol, 2,4-dimethyl-1,5-pentanediol, and 2,4-diethyl-1,5-pentanediol; alicyclic diols such as 1,3-cyclohexanediol, 1,3-cyclohexanedimethanol, 1,4-cyclohexanediol, 1,4-cyclohexanedimethanol, isosorbide, 2-bis(4-hydroxycyclohexyl)-propane, 2,7-norbornanediol, 2,3-norbornanediol, tetrahydrofuran-2,2-dimethanol, and 2,5-bis(hydroxymethyl)-1,4-dioxane; and aromatic diols such as 5,5-bis(hydroxymethyl)-2-phenyl-1,3-dioxane, p-xylene glycol, p-tetrachloroxylenediol, 1,4-bis(hydroxyethoxy)benzene, and 2,2-bis[(4-hydroxyethoxy)phenyl]propane. For the polyhydric alcohol, one of those may be used singly; otherwise, two or more thereof may be used in combination.

Examples of the carbonate compound include dimethyl carbonate, diethyl carbonate, dipropyl carbonate, dibutyl carbonate, diphenyl carbonate, ethylene carbonate, trimethylene carbonate, propylene carbonate, 1,2-butylene carbonate, and neopentylene carbonate. For the carbonate compound, one of those may be used singly; otherwise, two or more thereof may be used in combination.

Examples of the cyclic ester include ε-caprolactone, β-propiolactone, β-methyl-β-propiolactone, δ-valerolactone, glycolide, and lactide. For the cyclic ester, one of those may be used singly; otherwise, two or more thereof may be used in combination.

### <Polyether polycarbonate polyol>

Examples of the polyether polycarbonate polyol include polycondensates of a polyether polyol and a carbonate compound. The polyether polycarbonate polyol may be a product obtained by subjecting a diol compound different from any polyether polyol to copolymerization. Synthesis of the polyether polycarbonate polyol can be performed by a known method.

Specific examples of the polyether polyol to be used as a raw material for synthesis of the polyether polycarbonate polyol include the polyether polyols shown above, and specific examples of the carbonate compound include those that are the same as the carbonate compounds shown above as a raw material for synthesis of the polycarbonate polyol.

In the case that the terminal hydroxy group of the oxygen-containing polymer as described above is converted to form an oxygen-containing polymer into which a group represented as -OR but being not a hydroxy group has been introduced, the conversion of the hydroxy group can be performed, for example, through alkoxylation, esterification, or urethanization by a known method. Terminal alkoxylation is preferable for enhanced hydrophobicity.

For example, a method of using an organohalogen compound such as an halogenated alkyl is applied to the alkoxylation of the terminal hydroxy group of the oxygen-containing polymer. Examples of the organohalogen compound include organochlorine compounds such as methyl chloride, ethyl chloride, vinyl chloride, n-propyl chloride, isopropyl chloride, allyl chloride, n-butyl chloride, isobutyl chloride, sec-butyl chloride, tert-butyl chloride, 2-chloroethylmethyl ether, 2-chloroethylethyl ether, 2-chloroethylpropyl ether, and 2-chloroethylbutyl ether; organobromine compounds such as methyl bromide, ethyl bromide, vinyl bromide, n-propyl bromide, isopropyl bromide, allyl bromide, n-butyl bromide, isobutyl bromide, sec-butyl bromide, tert-butyl bromide, 2-bromoethylmethyl ether, 2-bromoethylethyl ether, 2-bromoethylpropyl ether, and 2-bromoethylbutyl ether; and organoiodine compounds such as methyl iodide, ethyl iodide, vinyl iodide, n-propyl iodide, isopropyl iodide, allyl iodide, n-butyl iodide, isobutyl iodide, sec-butyl iodide, tert-butyl iodide, and 2-iodoethylmethyl ether. Among them, methyl chloride, allyl chloride, methyl bromide, allyl bromide, methyl iodide, and allyl iodide are preferable for efficient conversion of the hydroxy group.

Examples of the oxygen-containing polymer at a terminus of which a group represented as -OR but being not a hydroxy group has been introduced include polyoxyalkylene dimethyl ether, polyoxyalkylene diethyl ether, polyoxyalkylene dipropyl ether, polyoxyalkylene diisopropyl ether, polyoxyalkylene diallyl ether, polyoxyalkylene dibutyl ether, polyoxyalkylene di(sec-butyl) ether, polyoxyalkylene di(tert-butyl) ether, polyoxyalkylene dipentyl ether, polyoxyalkylene dihexyl ether, polyoxyalkylene diheptyl ether, polyoxyalkylene dioctyl ether, polyoxyalkylene di(2-ethylhexyl) ether, polyoxyalkylene ethyl methyl ether, polyoxyalkylene propyl methyl ether, polyoxyalkylene isopropyl methyl ether, polyoxyalkylene butyl methyl ether, polyoxyalkylene sec-butyl methyl ether, polyoxyalkylene tert-butyl methyl ether, polyoxyalkylene pentyl methyl ether, polyoxyalkylene hexyl methyl ether, polyoxyalkylene octyl methyl ether, polyoxyalkylene 2-ethylhexyl methyl ether, polyoxyalkylene methyl allyl ether, polyoxyalkylene ethyl allyl ether, polyoxyalkylene propyl allyl ether, polyoxyalkylene isopropyl allyl ether, polyoxyalkylene butyl allyl ether, polyoxyalkylene sec-butyl allyl ether, polyoxyalkylene tert-butyl allyl ether, polyoxyalkylene pentyl allyl ether, polyoxyalkylene hexyl allyl ether, polyoxyalkylene heptyl allyl ether, polyoxyalkylene octyl allyl ether, and polyoxyalkylene 2-ethylhexyl allyl ether. Among them, polyoxyalkylene dimethyl ether, polyoxyalkylene diallyl ether, polyoxyalkylene ethyl methyl ether, polyoxyalkylene propyl methyl ether, polyoxyalkylene isopropyl methyl ether, polyoxyalkylene butyl methyl ether, polyoxyalkylene sec-butyl methyl ether, polyoxyalkylene tert-butyl methyl ether, polyoxyalkylene pentyl methyl ether, polyoxyalkylene hexyl methyl ether, polyoxyalkylene heptyl methyl ether, polyoxyalkylene octyl methyl ether, polyoxyalkylene 2-ethylhexyl methyl ether, polyoxyalkylene methyl allyl ether, polyoxyalkylene ethyl allyl ether, polyoxyalkylene propyl allyl ether, polyoxyalkylene isopropyl allyl ether, polyoxyalkylene butyl allyl ether, polyoxyalkylene sec-butyl allyl ether, polyoxyalkylene tert-butyl allyl ether, polyoxyalkylene pentyl allyl ether, polyoxyalkylene hexyl allyl ether, polyoxyalkylene heptyl allyl ether, polyoxyalkylene octyl allyl ether, and polyoxyalkylene 2-ethylhexyl allyl ether are preferable, and polyoxyalkylene dimethyl ether, polyoxyalkylene butyl methyl ether, and polyoxyalkylene 2-ethylhexyl methyl ether are more preferable, for easiness in alkoxylation and separability from water.

### <Number-average molecular weight>

The number-average molecular weight (Mn) of the oxygen-containing polymer is 250 to 20000, preferably 350 or more, and more preferably 500 or more, and, preferably 10000 or less, and more preferably 5000 or less.

Having Mn of 250 or more, the oxygen-containing polymer tends to have a boiling point of 200°C or more. The Mn should be 20000 or less for giving a viscosity that makes it easy to homogenously mix with the amine compound in preparing the absorbing solution.

### <Boiling point>

The boiling point of the oxygen-containing polymer is 200°C or more, preferably 220°C or more, and more preferably 250°C or more.

The boiling point of 200°C or more results in reduced volatilization in heating for desorbing carbon dioxide from the acidic gas absorbing solution, also leading to reduced impact on solvent loss, and the acidic gas absorbing solution can be efficiently reused.

### <Solubility parameter>

The solubility parameter (δₐ) of the oxygen-containing polymer is 15.0 (MPa)^{1/2} or more and less than 19.5 (MPa)^{1/2}.

With δₐ of 15.0 (MPa)^{1/2} or more, more carbon dioxide is absorbed by the acidic gas absorbing solution as a tendency. Having δₐ of less than 19.5 (MPa)^{1/2}, the oxygen-containing polymer can be regarded to be hydrophobic, and readily undergoes phase separation into an aqueous phase and an organic phase containing the oxygen-containing polymer and having carbon dioxide absorbed therein.

The solubility parameter (δₐ) of the oxygen-containing polymer is preferably 16.0 (MPa)^{1/2} or more, and more preferably 17.0 (MPa)^{1/2} or more for easy absorption of carbon dioxide by the acidic gas absorbing solution, and preferably 19.4 (MPa)^{1/2} or less, and more preferably 19.3 (MPa)^{1/2} or less for easy phase separation into an aqueous phase and an organic phase containing the oxygen-containing polymer and having carbon dioxide absorbed therein.

In the case that two or more oxygen-containing polymers are present in the acidic gas absorbing solution, the volume-average value of the solubility parameters of the oxygen-containing polymers is used as δₐ.

### (Amine compound)

The solubility parameter (δ_{b}) of the amine compound is 13.0 (MPa)^{1/2} to 25.5 (MPa)^{1/2}.

With δ_{b} of 13.0 (MPa)^{1/2} or more, more carbon dioxide is absorbed by the acidic gas absorbing solution as a tendency. δₐ of 25.5 (MPa)^{1/2} or less facilitates phase separation into an aqueous phase and an organic phase containing the amine compound and having carbon dioxide absorbed therein.

The solubility parameter (δ_{b}) of the amine compound is preferably 14.0 (MPa)^{1/2} or more, and more preferably 15.0 or more for easy absorption of carbon dioxide by the acidic gas absorbing solution, and preferably 25.3 (MPa)^{1/2} or less, and more preferably 25.0 (MPa)^{1/2} or less for easy phase separation into an aqueous phase and an organic phase containing the amine compound and having carbon dioxide absorbed therein.

In the case that two or more amine compounds are present in the absorbing solution, the volume-average value of the solubility parameters of the amine compounds is used as δ_{b}.

The amine compound preferably has a high boiling point for reduced volatilization in heating for desorbing carbon dioxide from the acidic gas absorbing solution and the resulting reduced impact on solvent loss, and for efficient reuse of the acidic gas absorbing solution. The boiling point of the amine compound is preferably 130°C or more, more preferably 140°C or more, and even more preferably 150°C or more. The amine compound preferably has secondary amine for allowing the acidic gas to be efficiently absorbed and desorbed.

Specific examples of the amine compound include diethylamine, N-ethylpropylamine, dipropylamine, diallylamine, diisopropylamine, di(2-methoxyethyl)amine, dibutylamine, disec-butylamine, diamylamine, dihexylamine, di-2ethylhexylamine, 3,3-iminobis(N,N-dimethylpropylamine), 2-(ethylamino)ethanol, 2-(propylamino)ethanol, isopropylaminoethanol, 2-(butylamino)ethanol, methylpropylaminoethanol, 4-(ethylamino)butanol, 4-(butylamino)butanol, benzylmethylamine, benzylethylamine, benzylpropylamine, benzylbutylamine, methylaniline, ethylaniline, propylaniline, and butylaniline.

The difference between the solubility parameter (δₐ) of the oxygen-containing polymer and the solubility parameter (δ_{b}) of the amine compound ( | δₐ - δ_{b} | ) is preferably 7.0 (MPa)^{1/2} or less, more preferably 6.3 (MPa)^{1/2} or less, and even more preferably 6.0 (MPa)^{1/2} or less.

Better compatibility is given as the oxygen-containing polymer is hydrophobic, the amine compound has the specific solubility parameter, and the difference between the solubility parameters of the two is smaller. Irrespective of the relationship between the magnitudes of δₐ and δ_{b}, | δₐ - δ_{b} | of 7.0 (MPa)^{1/2} or less indicates good compatibility between the two, making the absorbing solution homogenous as a tendency, and the acidic gas absorbing solution having carbon dioxide absorbed therein readily undergoes phase separation into an organic phase and an aqueous phase.

The amounts of oxygen-containing polymer and amine compound contained in the acidic gas absorbing solution are 5 to 90% by mass and 5 to 90% by mass, respectively, for allowing the acidic gas absorbing solution to sufficiently exert the absorption ability for carbon dioxide and allowing the acidic gas absorbing solution having carbon dioxide absorbed therein to undergo phase separation into an organic phase and an aqueous phase to reduce energy for recovering carbon dioxide with ease.

The amount of the oxygen-containing polymer contained in the acidic gas absorbing solution is more preferably 30% by mass or more, and even more preferably 40% by mass or more, and more preferably 70% by mass or less, and even more preferably 60% by mass or less.

The amount of the amine compound contained in the acidic gas absorbing solution is more preferably 30% by mass or more, and even more preferably 40% by mass or more, and more preferably 70% by mass or less, and even more preferably 60% by mass or less.

An additive such as an antioxidant, a corrosion inhibitor, and a viscosity modifier may be contained in the acidic gas absorbing solution, as necessary, in a manner without interfering the effects of the present invention.

The acidic gas absorbing solution may contain water. For example, even if the moisture content of the acidic gas absorbing solution is about 50% by mass, the acidic gas absorbing solution having carbon dioxide absorbed therein allows the moisture contained in the acidic gas absorbing solution to separate as an aqueous phase, and hence the amount of moisture in the organic phase can be as low as less than 10% by mass.

The acidic gas absorbing solution of the present embodiment can be produced by mixing the above oxygen-containing polymer and amine compound. Any of the aforementioned additives or water may be added and mixed, as necessary.

The acidic gas absorbing solution of the present embodiment is preferred for a recovery and/or separation process for an acidic gas, and can be preferably used particularly for the case that the acidic gas is carbon dioxide, namely, for a carbon dioxide recovery and/or separation process.

Examples of the carbon dioxide recovery and/or separation process include such a process that a gas containing carbon dioxide and the acidic gas absorbing solution are brought into contact to allow carbon dioxide to be selectively absorbed and separated, the solution having carbon dioxide absorbed therein is heated or subjected to reduced pressure to diffuse carbon dioxide, which is recovered, and the solution after the diffusion of carbon dioxide is recovered and regenerated as an acidic gas absorbing solution.

The temperature in allowing the acidic gas absorbing solution to absorb carbon dioxide is preferably -10°C or more, and more preferably 0°C or more for reduction in energy loads for cooling the gas, and preferably 50°C or less, and more preferably 40°C or less for sufficient separation of carbon dioxide.

The pressure of the gas in allowing the acidic gas absorbing solution to absorb carbon dioxide is not limited.

The temperature in allowing carbon dioxide to diffuse from the acidic gas absorbing solution is preferably 50°C or more, and more preferably 70°C or more in order to sufficiently release carbon dioxide from the acidic gas absorbing solution, and preferably 120°C or less, more preferably 100°C or less, and even more preferably 90°C or less for preventing the degradation of the acidic gas absorbing solution.

The temperature difference between absorption of carbon dioxide in the acidic gas absorbing solution and diffusion of carbon dioxide from the acidic gas absorbing solution is set to balance the thermal energy for diffusing carbon dioxide and the amount of energy to be recovered, and is preferably 80°C or less, and more preferably 60°C or less. The energy required can be reduced by reducing the temperature difference through a combination with such a process as hydrogen stripping and a heat pump (see JP 6906766 B).

### [Acidic gas reducing method]

In the acidic gas reducing method of the present embodiment, the acidic gas absorbing solution of the present embodiment and a gas containing carbon dioxide and moisture are brought into contact to reduce carbon dioxide in the gas.

Needless to say, the acidic gas absorbing solution of the present embodiment is effective for recovering carbon dioxide from a gas containing no moisture; also for recovering carbon dioxide from a gas containing moisture, the acidic gas absorbing solution of the present embodiment allows separation and removal of moisture without evaporation by heating, and hence can exert the effect to reduce energy required for recovering the acidic gas from the gas to a higher degree.

The contact between the acidic gas absorbing solution and the gas may be achieved, for example, by a method of adding the acidic gas absorbing solution into the gas, a method of continuously circulating the gas in a container filled with the acidic gas absorbing solution, or a method of putting the gas in a container filled with the acidic gas absorbing solution. In addition, a method of providing packing material in a container, spraying the acidic gas absorbing solution to the gas, or bubbling the acidic gas absorbing solution with the gas can be used to increase the efficiency of contact between the acidic gas absorbing solution and the gas.

In the acidic gas reducing method of the present embodiment, an organic phase containing the oxygen-containing polymer and the amine compound can be recovered from the acidic gas absorbing solution that has undergone phase separation through contact with the gas containing carbon dioxide and moisture, and reused as an acidic gas absorbing solution to be brought into contact with a gas containing carbon dioxide and moisture.

As described above, the acidic gas absorbing solution of the present embodiment, after having carbon dioxide absorbed therein through contact with a gas containing carbon dioxide and moisture, undergoes phase separation into an organic phase and an aqueous phase, the organic phase containing carbon dioxide, the oxygen-containing polymer, and the amine compound. This organic phase can be separated from the aqueous phase and recovered with ease. The carbon dioxide can be recovered by heating the organic phase separated and recovered to desorb the carbon dioxide, and the organic phase can be regenerated as an acidic gas absorbing solution. This acidic gas absorbing solution can be reused for reduction of the acidic gas, and such an acidic gas reducing method enables recycling of an acidic gas absorbing solution.

### Examples

The following specifically describes the present invention on the basis of examples, but the present invention is not limited by the following examples, and various modifications without departing from the subject matter of the present invention are permitted.

### [Synthesis of oxygen-containing polymers]

### (Synthesis Example 1)

With 1000 g of polypropylene glycol (bifunctional PPG (number of terminal hydroxy groups: 2); Mn: 400), which had been obtained by subjecting propylene oxide (PO) to ringopening polymerization with propylene glycol, as an initiator, 7000 g of PO was polymerized in the presence of potassium hydroxide, and then neutralization and removal of neutralized salts were performed to yield PPG (1) (bifunctional PPG; Mn: 5200).

### (Synthesis Example 2)

PPG (2) (bifunctional PPG; Mn: 2800) was obtained in the same manner as in Synthesis Example 1 except that the amount of PO to be polymerized was changed to 4000 g in Synthesis Example 1.

### (Synthesis Example 3)

With 1000 g of propylene glycol as an initiator, 12158 g of PO was polymerized in the presence of potassium hydroxide, and then neutralization and removal of neutralized salts were performed to yield PPG (3) (bifunctional PPG; Mn: 1300).

### (Synthesis Example 4)

With 74 g of butanol as an initiator, 326 g of PO was polymerized in the presence of a zinc hexacyanocobaltate complex having tert-butanol as ligands to yield PPG (4)
(monofunctional PPG; Mn: 540).

### (Synthesis Example 5)

With 1340 g of ethylene glycol monobutyl ether as an initiator, 1926 g of PO was polymerized in the presence of potassium hydroxide, and then neutralization and removal of neutralized salts were performed to yield PPG (5') (monofunctional PPG; hydroxyl value: 188 mg KOH/g). Then, 28% by mass methanol solution of sodium methoxide (NaOMe) was added to 2000 g of PPG (5') in such a manner that 1.1 mol of NaOMe was added per 1 mol of hydroxy groups of PPG (5'), the resultant was warmed to 70°C, and nitrogen was then flowed therein to distill off methanol under normal pressure. Subsequently, the temperature was increased to 130°C, and stirring was performed to mix under a reduced pressure of -0.1 MPaG for 4 hours to distill off methanol.

The temperature was then decreased to 100°C, thereafter 1.1 mol of chloromethane per 1 mol of NaOMe was sequentially added at a charging rate of 400 g/hr, and reacted at 100°C for 2 hours. Subsequently, unreacted chloromethane was distilled off by stirring and mixing under a reduced pressure of -0.1 MPaG at 100°C for 0.5 hours to give a crude product in which the hydroxy groups of PPG (5') had been methoxylated.

Then, 2000 g of distilled water was added to the reactor, and the resultant was stirred and mixed for 15 minutes to cause oil-water separation of neutralized salts. Only the oil layer was extracted, 4 parts by mass of an adsorbent was added to 100 parts by mass of the oil layer, the temperature was increased to 120°C, and the oil layer was then stirred and mixed under a reduced pressure of -0.1 MPaG for 1.5 hours. The adsorbent was filtered off to give PPG (5) (Mn: 476) as a terminus-methylated derivative of PPG (5').

### (Synthesis Example 6)

PPG (6) (monofunctional PPG; Mn: 949) was obtained in the same manner as in Synthesis Example 3 except that the initiator was changed to 743 g of 2-ethylhexanol and the amount of PO to be polymerized was changed to 3457 g in Synthesis Example 3.

### (Synthesis Example 7)

PPG (7) (terminus-methylated derivative of monofunctional PPG; Mn: 1334) was obtained in the same manner as in Synthesis Example 5 except that the initiator was changed to 552 g of butanol and the amount of PO to be polymerized was changed to 7842 g in Synthesis Example 5.

### (Synthesis Example 8)

PPG (8) (terminus-methylated derivative of monofunctional PPG; Mn: 1849) was obtained in the same manner as in Synthesis Example 5 except that the initiator was changed to 171 g of methanol and the amount of PO to be polymerized was changed to 7829 g in Synthesis Example 5.

### (Synthesis Example 9)

PPG (9) (terminus-methylated derivative of monofunctional PPG; Mn: 2586) was obtained in the same manner as in Synthesis Example 8 except that the initiator was changed to 120 g of methanol and the amount of PO to be polymerized was changed to 7880 g in Synthesis Example 8.

### (Synthesis Examples 10 and 11)

PPG (10) (bifunctional PPG; Mn: 880) or PPG (11) (bifunctional PPG; Mn: 550) was obtained in the same manner as in Synthesis Example 3 except that the amount of PO to be polymerized was changed to 8486 g (Synthesis Example 10) or 4863 g (Synthesis Example 11) in Synthesis Example 3.

### [Preparation of acidic gas absorbing solutions]

### (Examples 1 to 24)

With use of PPGs (1) to (11) obtained in Synthesis Examples 1 to 11 and tripropylene glycol (manufactured by Tokyo Chemical Industry Co., Ltd.; Mn: 330; PPG (12)) as oxygen-containing polymers, acidic gas absorbing solutions each having an amine compound mixed therein at a mass ratio shown in Table 1 were prepared.

Table 1 shows the solubility parameters (δₐ) of the oxygen-containing polymers, the solubility parameters (δ_{b}) of the amine compounds, and the differences between δₐ and δ_{b} ( | δₐ - δ_{b} | ).

The abbreviations of the amine compounds in Table 1 are as follows.
- DAA: diamylamine
- DBA: dibutylamine
- BMA: benzylmethylamine
- IBDMAPA: 3,3-iminobis(N,N-dimethylpropylamine)
- EAE: 2-(ethylamino)ethanol
- MPAE: methylpropylaminoethanol
- MAE: 2-(methylamino)ethanol

### [Evaluation of acidic gas absorbing solutions]

The acidic gas absorbing solutions of the examples were evaluated on items shown below. The evaluation results are shown in Table 1. Examples 1 to 15 are working examples, and Examples 16 to 24 are comparative examples.

### <Amount of moisture in organic phase>

For every acidic gas absorbing solution, a water-mixed solution was prepared by stirring 10 g of the acidic gas absorbing solution and 10 g of water at 25°C (normal temperature) for about 10 minutes and left to stand at 25°C (normal temperature) for 24 hours; as a result, the water-mixed solution underwent phase separation into an organic phase (upper layer) containing the acidic gas absorbing solution as a main component and an aqueous phase (lower layer) containing water as a main component.

The amount of moisture in the organic phase was measured with a Karl Fischer moisture meter (coulometric titration method). Examples 16 to 24 exhibited more than the detection upper limit value of 10% by mass.

**[Table 1]**

| Example | Oxygen-containing polymer | | | | | Amine compound | | | \|δₐ-δ_{b}\| | Amount of moisture in organic phase [% by mass] |
|---|---|---|---|---|---|---|---|---|---|---|
| | PPG | Mn | Boiling point | δₐ | [% by mass] | Type | δ_{b} | [% by mass] | | |
| | | | [°C] | [(MPa)^{1/2}] | | | [(MPa)^{1/2}] | | [(MPa)^{1/2}] | |
| 1 | 1 | 5200 | 270≤ | 18.2 | 90 | DAA | 17.0 | 10 | 1.2 | 2.7 |
| 2 | 2 | 2800 | 270≤ | 18.5 | 90 | DAA | 17.0 | 10 | 1.4 | 3.2 |
| 3 | 3 | 1300 | 270≤ | 19.3 | 90 | DAA | 17.0 | 10 | 2.3 | 7.3 |
| 4 | 4 | 540 | 270≤ | 18.9 | 90 | EAE | 24.5 | 10 | 5.6 | 8.8 |
| 5 | 5 | 437 | 270≤ | 17.2 | 90 | MPAE | 22.6 | 10 | 5.4 | 4.1 |
| 6 | 6 | 949 | 270≤ | 17.3 | 90 | DBA | 16.8 | 10 | 0.5 | 6.7 |
| 7 | 7 | 1334 | 270≤ | 17.5 | 90 | DBA | 16.8 | 10 | 0.6 | 3.0 |
| 8 | 7 | 1334 | 270≤ | 17.5 | 70 | DBA | 16.8 | 30 | 0.4 | 6.2 |
| 9 | 7 | 1334 | 270≤ | 17.5 | 50 | DBA | 16.8 | 50 | 0.4 | 4.5 |
| 10 | 7 | 1334 | 270≤ | 17.5 | 90 | BMA | 18.2 | 10 | 0.7 | 3.3 |
| 11 | 7 | 1334 | 270≤ | 17.5 | 90 | IBDMAPA | 17.3 | 10 | 0.2 | 7.5 |
| 12 | 8 | 1849 | 270≤ | 17.5 | 70 | DBA | 16.8 | 30 | 0.7 | 4.0 |
| 13 | 8 | 1849 | 270≤ | 17.5 | 50 | DBA | 16.8 | 50 | 0.7 | 4.9 |
| 14 | 8 | 1849 | 270≤ | 17.5 | 70 | BMA | 18.2 | 30 | 0.7 | 9.5 |
| 15 | 9 | 2586 | 270≤ | 17.6 | 50 | DBA | 16.8 | 50 | 0.8 | 4.0 |
| 16 | 10 | 880 | 270≤ | 19.9 | 90 | DAA | 17.0 | 10 | 2.9 | 10< |
| 17 | 11 | 550 | 270≤ | 21.1 | 90 | DAA | 17.0 | 10 | 4.1 | 10< |
| 18 | 12 | 330 | 273 | 24.8 | 90 | DAA | 17.0 | 10 | 7.8 | 10< |
| 19 | 1 | 5200 | 270≤ | 18.2 | 90 | MAE | 25.6 | 10 | 7.4 | 10< |
| 20 | 2 | 2800 | 270≤ | 18.5 | 90 | MAE | 25.6 | 10 | 7.2 | 10< |
| 21 | 3 | 1300 | 270≤ | 19.3 | 90 | MAE | 25.6 | 10 | 6.4 | 10< |
| 22 | 10 | 880 | 270≤ | 19.9 | 90 | MAE | 25.6 | 10 | 5.7 | 10< |
| 23 | 11 | 550 | 270≤ | 21.1 | 90 | MAE | 25.6 | 10 | 4.5 | 10< |
| 24 | 12 | 330 | 273 | 24.8 | 90 | MAE | 25.6 | 10 | 0.8 | 10< |

As can be seen from Table 1, acidic gas absorbing solutions having a high boiling point and containing a hydrophobic oxygen-containing polymer having a specific solubility parameter and an amine compound having a specific solubility parameter (Examples 1 to 15) underwent phase separation through absorption of carbon dioxide, and each was found to allow the organic phase to contain a reduced amount of moisture. Accordingly, in the present embodiment, evaporation of moisture by heating is not needed to separate and remove the moisture from the acidic gas absorbing solution having carbon dioxide absorbed therein, and the oxygen-containing polymer has low volatility; hence, it can be said that the organic phase can be efficiently separated and recovered, the energy required for recovering the acidic gas from the gas can be reduced, and the acidic gas absorbing solution can be efficiently regenerated.

## Claims

1. An acidic gas absorbing solution that reversibly absorbs and desorbs carbon dioxide, the acidic gas absorbing solution comprising:
an oxygen-containing polymer; and an amine compound, wherein
the oxygen-containing polymer has at least one group selected from the group consisting of an oxyalkylene group, a carbonate group, and an ester group, has a number-average molecular weight of 250 to 20000, has a boiling point of 200°C or more, and has a solubility parameter of 15.0 (MPa)^{1/2} or more and less than 19.5 (MPa)^{1/2}, and
the amine compound has a solubility parameter of 13.0 to 25.5 (MPa)^{1/2}.

2. The acidic gas absorbing solution according to claim 1, wherein the oxygen-containing polymer has a group represented as -OR at a terminus, the R is a hydrogen atom or a bonding group having 1 to 8 carbon atoms, and the bonding group is optionally linear or branched, optionally has an unsaturated bond, and optionally contains at least either one of a nitrogen atom and an oxygen atom.

3. The acidic gas absorbing solution according to claim 1, wherein the oxygen-containing polymer is at least one selected from the group consisting of polyether monool, polyether polyol, polyester polyol, polycarbonate polyol, and polyether polycarbonate polyol.

4. The acidic gas absorbing solution according to claim 1, wherein a difference between the solubility parameter of the oxygen-containing polymer and the solubility parameter of the amine compound is 7.0 (MPa)^{1/2} or less.

5. The acidic gas absorbing solution according to claim 1, comprising the oxygen-containing polymer in an amount of 5 to 90% by mass and the amine compound in an amount of 5 to 90% by mass.

6. The acidic gas absorbing solution according to claim 1, for a recovery and/or separation process for an acidic gas.

7. An acidic gas reducing method, wherein the acidic gas absorbing solution according to any one of claims 1 to 6 and a gas comprising carbon dioxide and moisture are brought into contact to reduce carbon dioxide in the gas.

8. The acidic gas reducing method according to claim 7, wherein an organic phase comprising the oxygen-containing polymer and the amine compound is recovered from the acidic gas absorbing solution that has undergone phase separation through contact with the gas comprising carbon dioxide and moisture, and the organic phase is reused as an acidic gas absorbing solution for bringing into contact with a gas comprising carbon dioxide and water.
